# EUROPEAN PATENT SPECIFICATION

(11) **EP 2 683 091 B1**
(45) Date of publication and mention of the grant of the patent: **22.08.2018**
(21) Application number: 12186940.8
(22) Date of filing: 02.10.2012
(51) Int. Cl.: H04B 7/04, H04B 7/06, H04B 7/08, H04B 7/0417, H04W 8/22

(54) **Communication mode selection method and device**
Verfahren und Vorrichtung zur Kommunikationsauswahlmodus
Procédé et dispositif de sélection de mode de communication

(30) Priority: 30.12.2011 CN 201110455718
(43) Date of publication of application: 08.01.2014
(73) Proprietor: Huawei Device Co., Ltd., Longgang District Shenzhen Guangdong 518129 (CN)
(72) Inventor: Zhang, Kaibing, 518129 Shenzhen (CN); Sun, Zehui, 518129 Shenzhen (CN); Zhu, Guangze, 518129 Shenzhen (CN); Shui, Xinchao, 518129 Shenzhen (CN)
(74) Representative: Isarpatent

(56) References cited:
- WO-A1-2007/041845
- WO-A1-2010/051663
- US-A1- 2007 281 746
- US-A1- 2008 159 203
- US-A1- 2011 044 193

## Description

### FIELD OF THE INVENTION

The present invention relates to the field of communications, and in particular, to a communication mode selection method and device.

### BACKGROUND OF THE INVENTION

In recent years, a multiple-input multiple-output (Multiple-Input Multiple-Out-put, MIMO) technique has emerged as a new technique in the field of wireless communications. The MIMO technique includes a spatial diversity technique and a spatial multiplexing technique, a communication mode using the spatial diversity technique is named as a MIMO A mode, and a communication mode using the spatial multiplexing technique is named as a MIMO B mode, in which the MIMO B mode truly embodies an essential advantage that the data capacity of the MIMO technique is high. General conditions of using the MIMO B mode are that a modulation and demodulation method of a terminal in a current working mode is 64QAM-CTC-5/6, that is, a highest uplink or downlink order method, and a bit error rate is within a range (less than 5%) or no bit error occurs under the highest order.

When it is detected by a base station that a terminal meets the conditions of using the MIMO B mode, the terminal is switched to the MIMO B mode, and according to the working principle of the MIMO B mode, signals transmitted by different antennas of the base station include different information. However, if a single antenna is currently adopted to receive data, in this working mode, a receiving antenna can only receive part of the information and lose part of the information, resulting in that bit errors occur to all received data packets eventually. In this case, the base station switches the terminal back to the MIMO A mode according to a high bit error rate, and when it is detected by the terminal or the base station again that the terminal meets the conditions of switching to the MIMO B mode, the terminal is switched to the MIMO B working mode again, resulting in that bit errors occur to all data packets received by the terminal and the terminal is switched back to the MIMO A mode again. Such repeated switching may cause jittering of a communication service. US2008/0159203 discloses providing for wireless communications mode switching based on spectral efficiency in a MIMO communications system. According to this document, if the spectral efficiency of the spatial multiplexing is greater than the spectral efficiency of the space time bloc coding, spatial multiplexing is selected.

### SUMMARY OF THE INVENTION

Accordingly, the present invention provides a communication mode selection method and device, so as to solve the problem of jittering of a communication service caused by repeated switching of working modes while a multiple-input multiple-output technique is used.

A communication mode selection method includes:
obtaining a current state parameter of a terminal, the state parameter at least including the number of antennas currently used by the terminal; and
selecting a mode corresponding to a spatial multiplexing technique as a mode for communication between the terminal and a corresponding base station when the state parameter meets a predetermined condition, the predetermined condition at least including that the number of the antennas is greater than 1.

A communication mode selection device includes:
a state parameter obtaining module, configured to obtain a current state parameter of a terminal; and
a communication mode selection module, configured to select a mode corresponding to a spatial multiplexing technique as a mode for communication between the terminal and a corresponding base station when the state parameter meets a predetermined condition, the predetermined condition at least including that the number of antennas is greater than 1.

The communication mode selection method and device provided by the embodiments consider the number of receiving or transmitting antennas currently used by the terminal as a necessary condition for determining whether the MIMO B mode is used for communication between the terminal and the base station; and entering the MIMO B mode is rejected if the number of the receiving antennas is 1, which prevents the terminal from entering the MIMO B mode in the case of using a single antenna, so that repeated switching between the MIMO A mode and the MIMO B mode may not occur, and therefore, the problem of service jittering caused by repeated switching is avoided.

### BRIEF DESCRIPTION OF THE DRAWINGS

To illustrate the technical solutions in the embodiments of the present invention or in the prior art more clearly, the accompanying drawings needed for describing the embodiments or the prior art are introduced below briefly. Apparently, the accompanying drawings in the following descriptions merely show some of the embodiments of the present invention, and persons skilled in the art may obtain other drawings according to the accompanying drawings without creative efforts.
FIG. 1 is a flow chart of a communication mode selection method provided by an embodiment of the present invention;
FIG. 2 is a flow chart of a method for obtaining a state parameter of a terminal in a communication mode selection method provided by an embodiment of the present invention; and
FIG. 3 is a schematic structural diagram of a communication mode selection device provided by an embodiment of the present invention.

### DETAILED DESCRIPTION OF THE EMBODIMENTS

The present invention provides a communication mode selection method and device, which consider the number of antennas currently used by a terminal as one of conditions for selecting a communication mode between the terminal and a base station, and when the number of the antennas is greater than 1, it is possible for the terminal to select a mode corresponding to a spatial multiplexing technique for communication.

The technical solutions of the embodiments of the present invention are hereinafter described clearly and completely with reference to the accompanying drawings in the embodiments of the present invention. Evidently, the described embodiments are some exemplary embodiments of the present invention, rather than all embodiments of the present invention. All other embodiments obtained by persons skilled in the art based on the embodiments of the present invention without creative effects shall fall within the protection scope of the present invention.

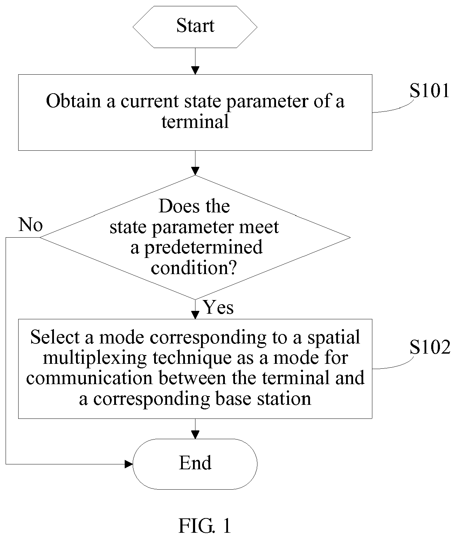

A communication mode selection method is provided by the present invention, and as shown in FIG. 1, the method includes the following steps:
S101: Obtain a current state parameter of a terminal, the state parameter at least including the number of antennas currently used by the terminal.

The antennas currently used by the terminal may be receiving antennas, and may also be transmitting antennas.

S102: Select a mode corresponding to a spatial multiplexing technique as a mode for communication between the terminal and a corresponding base station, when the state parameter meets a predetermined condition, the predetermined condition at least including that the number of the antennas is greater than 1.

It should be noted that, for the base station, the receiving antennas and the transmitting antennas may be different, and the modes for uplink communication and downlink communication may also be different. When the receiving antennas are currently used by the terminal, it means that downlink communication is implemented between the terminal and the base station, and a mode corresponding to the spatial multiplexing technique is selected as a mode for communication between the terminal and the base station when the number of the receiving antennas is greater than 1. On the contrary, when the transmitting antennas are currently used, it means that uplink communication is implemented between the terminal and the base station, and a mode corresponding to the spatial multiplexing technique is selected as a mode for communication between the terminal and the base station when the number of the transmitting antennas is greater than 1.

The communication mode selection method provided by the embodiment considers the number of the antennas currently used by the terminal as a necessary condition for selecting the communication mode between the terminal and the base station, and only when the number of the antennas is greater than 1, that is, not only one antenna is currently used, a MIMO B mode may be selected for communication. In other words, entering the MIMO B mode is rejected when the terminal currently uses a single antenna, which avoids service jittering caused by using a single antenna in the MIMO B mode, and enhances user experience of the MIMO technique.

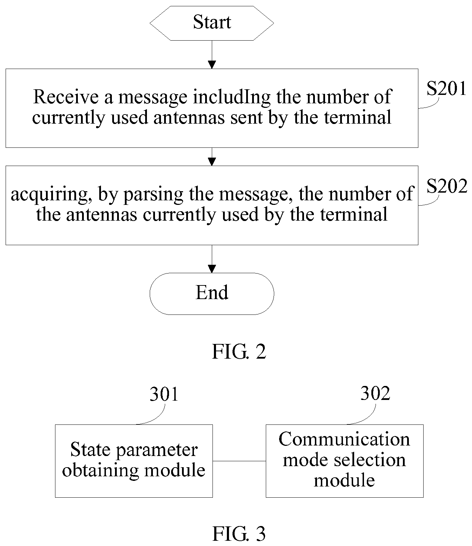

Further, as shown in FIG. 2, the obtaining the current state parameter of the terminal in the embodiment includes the following steps:
S201: Receive a message including the number of currently used antennas sent by the terminal.

The message may be in the following format:

| | | | | |
|---|---|---|---|---|
| Name | Type (1 byte) | Length | Value (variable-length) | PHY Scope |

Type is a newly added field, used for defining the number of antennas used by the terminal. The length of Type may be one byte, lower four bits represent the number of receiving antennas, and higher four bits represent the number of transmitting antennas.

S202: acquiring, by parsing the message, the number of the antennas currently used by the terminal.

The terminal may actively report the number of used antennas in a method of reporting according to a predetermined cycle or in a method of reporting when the number of the used antennas changes. The embodiment is not limited thereto, and no matter which method is adopted, the number of the antennas can be acquired accurately.

Further, according to different application scenarios, the method of the embodiment is further divided into the following two implementation ways:
1. On the basis of having determined that the MIMO B mode may be used by the terminal for communication, the method includes:
   obtaining the number of the antennas currently used by the terminal; and
   selecting a mode corresponding to the spatial multiplexing technique as a mode for communication between the terminal and the corresponding base station when the number of the antennas is greater than 1.
2. Consider the number of the antennas as one of judging conditions for selecting the MIMO B mode, and the method includes:
   obtaining the number of the antennas currently used by the terminal, a currently used modulation and demodulation method and a current bit error rate; and
   when the number of the antennas is greater than 1, the currently used modulation and demodulation method is a highest uplink or downlink order, i.e., 64QAM-CTC-5/6, and the bit error rate of the highest order is less than a predetermined value, selecting a mode corresponding to the spatial multiplexing technique as a mode for communication between the terminal and the corresponding base station.

It should be noted that, the preceding three judging conditions, that is, the number of the antennas being greater than 1, the modulation and demodulation method being 64QAM-CTC-5/6, and the bit error rate being less than the predetermined value, are not limited to any precedence order, and if any one of the three conditions is not met, the MIMO B mode is not selected as the mode for communication between the terminal and the base station.

It may be seen from the above two implementation ways that the method of the present invention may be implemented after or before the determination that the terminal may select the MIMO B mode. When it is determined that the number of the antennas is less than 1, it is not necessary to judge whether the other conditions are met.

It should be noted that, the method of the present invention is applicable to both the terminal and the base station. When the method is used for the terminal, after the determination of selecting the MIMO B mode, the terminal further reports a result to the base station.

In accordance to the preceding method, the present invention further provides a communication mode selection device, and as shown in FIG. 3, the device includes:
a state parameter obtaining module 301, configured to obtain a current state parameter of a terminal; and
a communication mode selection module 302, configured to select a mode corresponding to a spatial multiplexing technique as a mode for communication between the terminal and a corresponding base station when the state parameter meets a predetermined condition, the predetermined condition at least including that the number of the antennas is greater than 1.

Further, the state parameter obtaining module includes:
a receiving unit, configured to receive a message including the number of the currently used antennas sent by the terminal; and
a parsing unit, configured to parse the number of the antennas used by the terminal from the message.

The communication mode selection device described by the embodiment is applicable to both a mobile communication terminal and a base station, and considers the number of the antennas currently used by the terminal as a necessary condition for selecting the MIMO B mode, which avoids service jittering caused by the terminal entering the MIMO B mode in the case of using a single antenna. When the device is used for the mobile communication terminal, the result of the selection is reported to the corresponding base station. A reporting process is the same as the existing process of reporting information to the base station by the terminal, so the details are not repeated here.

Each embodiment describes the present invention by using a progressive method. Each embodiment focuses on the difference from the other embodiments. For the same or similar parts among all the embodiments, reference may be made to the relevant parts.

The preceding description disclosed in the embodiments allows a person skilled in the art to implement or use the present invention. Multiple modifications to these embodiments are apparent for a person skilled in the art. The invention is defined by the claims.

## Claims

1. A communication mode selection method, comprising:
obtaining a current state parameter of a terminal, the state parameter at least comprising the number of antennas currently used by the terminal; and
from a first mode corresponding to a spatial diversity technique and a second mode corresponding to a spatial multiplexing technique, switching to the second mode as a mode for communication between the terminal and a corresponding base station when the state parameter meets a predetermined condition, the predetermined condition at least comprising that the number of the antennas currently used by the terminal is greater than 1, so that entering the second mode is rejected if the number of receiving antennas is 1.

2. The method according to claim 1, wherein the obtaining the current state parameter of the terminal comprises:
receiving a message comprising the number of currently used antennas sent by the terminal; and
acquiring, by parsing the message, the number of the antennas currently used by the terminal.

3. The method according to claim 1, wherein the number of the antennas comprises:
the number of receiving antennas or the number of transmitting antennas.

4. The method according to claim 3, wherein when the number of the antennas is the number of the receiving antennas, the selecting a mode corresponding to a spatial multiplexing technique as a mode for communication between the terminal and a corresponding base station comprises:
selecting a mode corresponding to the spatial multiplexing technique as a mode for downlink communication between the terminal and the corresponding base station.

5. The method according to claim 3, wherein when the number of the antennas is the number of the transmitting antennas, the selecting a mode corresponding to a spatial multiplexing technique as a mode for communication between the terminal and a corresponding base station comprises:
selecting the spatial multiplexing technique as a mode for uplink communication between the terminal and the corresponding base station.

6. The method according to claim 1, wherein the state parameter further comprises:
a current modulation and demodulation method and a bit error rate of the terminal.

7. The method according to claim 6, wherein the predetermined condition further comprises that:
the current modulation and demodulation method of the terminal is a highest order method, and the bit error rate is less than a predetermined value.

8. A communication mode selection device, comprising:
a state parameter obtaining module, configured to obtain a current state parameter of a terminal; and
a communication mode selection module, configured to from a first mode corresponding to a spatial diversity technique and a second mode corresponding to a spatial multiplexing technique, switching to the second mode as a mode for communication between the terminal and a corresponding base station when the state parameter meets a predetermined condition, the predetermined condition at least comprising that the number of antennas currently used by the terminal is greater than 1, so that entering the second mode is rejected if the number of the antennas is 1.

9. The device according to claim 8, wherein the state parameter obtaining module comprises:
a receiving unit, configured to receive a message containing the number of currently used antennas sent by the terminal; and
a parsing unit, configured to acquiring, by parsing the message, the number of the antennas currently used by the terminal.

10. The device according to claim 8 or 9, wherein the device is applicable to a base station or a mobile communication terminal.

## Patentansprüche

1. Kommunikationsmodus-Auswahlverfahren, umfassend:
Erhalten eines aktuellen Zustandsparameters eines Endgeräts, wobei der Zustandsparameter mindestens die Anzahl von derzeit von dem Endgerät verwendeten Antennen umfasst; und
bei einem ersten Modus, der einer räumlichen Diversitätstechnik entspricht, und einem zweiten Modus, der einer räumlichen Multiplextechnik entspricht, Umschalten zu dem zweiten Modus als einem Modus für die Kommunikation zwischen dem Endgerät und einer entsprechenden Basisstation, wenn der Zustandsparameter eine vorbestimmte Bedingung erfüllt, wobei die vorbestimmte Bedingung mindestens umfasst, dass die Anzahl der aktuell von dem Endgerät verwendeten Antennen größer als 1 ist, sodass das Eintreten in den zweiten Modus abgelehnt wird, wenn die Anzahl der Empfangsantennen 1 ist.

2. Verfahren nach Anspruch 1, wobei das Erhalten des aktuellen Zustandsparameters des Endgeräts umfasst:
Empfangen einer Nachricht, welche die von dem Endgerät gesendete Anzahl der aktuell verwendeten Antennen umfasst; und
Erfassen, durch Analysieren der Nachricht, der Anzahl der Antennen, die aktuell von dem Endgerät verwendet werden.

3. Verfahren nach Anspruch 1, wobei die Anzahl der Antennen umfasst: die Anzahl der Empfangsantennen oder die Anzahl der Sendeantennen.

4. Verfahren nach Anspruch 3, wobei, wenn die Anzahl der Antennen die Anzahl der Empfangsantennen ist, das Auswählen eines einer räumlichen Multiplextechnik entsprechenden Modus als einen Modus für die Kommunikation zwischen dem Endgerät und einer entsprechenden Basisstation umfasst: Auswählen eines der räumlichen Multiplextechnik entsprechenden Modus als einen Modus für die Downlink-Kommunikation zwischen dem Endgerät und der entsprechenden Basisstation.

5. Verfahren nach Anspruch 3, wobei, wenn die Anzahl der Antennen die Anzahl der Sendeantennen ist, das Auswählen eines einer räumlichen Multiplextechnik entsprechenden Modus als einen Modus für die Kommunikation zwischen dem Endgerät und einer entsprechenden Basisstation umfasst:
Auswählen der räumlichen Multiplextechnik als einen Modus für die Uplink-Kommunikation zwischen dem Endgerät und der entsprechenden Basisstation.

6. Verfahren nach Anspruch 1, wobei der Zustandsparameter ferner umfasst: ein aktuelles Modulations- und Demodulationsverfahren und eine Bitfehlerrate des Endgeräts.

7. Verfahren nach Anspruch 6, wobei die vorbestimmte Bedingung ferner umfasst, dass:
das aktuelle Modulations- und Demodulationsverfahren des Endgeräts ein Verfahren höchster Ordnung ist, und
die Bitfehlerrate kleiner als ein vorbestimmter Wert ist.

8. Kommunikationsmodus-Auswahlvorrichtung, umfassend:
ein Zustandsparameter-Erlangungsmodul, das konfiguriert ist, um einen aktuellen Zustandsparameter eines Endgeräts zu erhalten; und
ein Kommunikationsmodus-Auswahlmodul, das konfiguriert ist, bei einem ersten Modus, der einer räumlichen Diversitätstechnik entspricht, und einem zweiten Modus, der einer räumlichen Multiplextechnik entspricht, Umschalten zu dem zweiten Modus als einem Modus für die Kommunikation zwischen dem Endgerät und einer entsprechenden Basisstation, wenn der Zustandsparameter eine vorbestimmte Bedingung erfüllt, wobei die vorbestimmte Bedingung mindestens umfasst, dass die Anzahl der aktuell von dem Endgerät verwendeten Antennen größer als 1 ist, sodass das Eintreten in den zweiten Modus abgelehnt wird, wenn die Anzahl der Antennen 1 ist.

9. Vorrichtung nach Anspruch 8, wobei das Zustandsparameter-Erlangungsmodul umfasst:
eine Empfangseinheit, die konfiguriert ist, um eine Nachricht zu empfangen, die die von dem Endgerät gesendete Anzahl von aktuell verwendeten Antennen enthält; und
eine Analyseeinheit, die konfiguriert ist, um durch Analysieren der Nachricht die Anzahl der Antennen zu erfassen, die aktuell von dem Endgerät verwendet werden.

10. Vorrichtung nach Anspruch 8 oder 9, wobei die Vorrichtung auf eine Basisstation oder ein mobiles Kommunikationsendgerät anwendbar ist.

## Revendications

1. Procédé de sélection de mode de communication, consistant à :
obtenir un paramètre d'état actuel d'un terminal, le paramètre d'état comprenant au moins le nombre d'antennes actuellement utilisées par le terminal ; et
à partir d'un premier mode correspondant à une technique de diversité spatiale et d'un second mode correspondant à une technique de multiplexage spatial, commuter vers le second mode en guise de mode de communication entre le terminal et une station de base correspondante quand le paramètre d'état satisfait à une condition prédéterminée, la condition prédéterminée consistant au moins à ce que le nombre d'antennes actuellement utilisées par le terminal soit supérieur à 1, de sorte que le passage dans le second mode soit rejeté si le nombre d'antennes de réception est égal à 1.

2. Procédé selon la revendication 1, dans lequel l'obtention du paramètre d'état actuel du terminal consiste à :
recevoir un message comprenant le nombre d'antennes actuellement utilisées, envoyé par le terminal ; et
acquérir, en analysant le message, le nombre d'antennes actuellement utilisées par le terminal.

3. Procédé selon la revendication 1, dans lequel le nombre d'antennes comprend :
le nombre d'antennes de réception ou le nombre d'antennes d'émission.

4. Procédé selon la revendication 3, dans lequel, quand le nombre d'antennes est le nombre d'antennes de réception, la sélection d'un mode correspondant à une technique de multiplexage spatial en guise de mode de communication entre le terminal et une station de base correspondante consiste à :
sélectionner un mode correspondant à la technique de multiplexage spatial en guise de mode de communication en liaison descendante entre le terminal et la station de base correspondante.

5. Procédé selon la revendication 3, dans lequel, quand le nombre d'antennes est le nombre d'antennes d'émission, la sélection d'un mode correspondant à une technique de multiplexage spatial en guise de mode de communication entre le terminal et une station de base correspondante consiste à :
sélectionner la technique de multiplexage spatial en guise de mode de communication en liaison montante entre le terminal et la station de base correspondante.

6. Procédé selon la revendication 1, dans lequel le paramètre d'état comprend en outre :
une méthode actuelle de modulation et de démodulation et un taux d'erreur de bit du terminal.

7. Procédé selon la revendication 6, dans lequel la condition prédéterminée consiste en outre à ce que :
la méthode actuelle de modulation et de démodulation du terminal soit une méthode de poids fort, et le taux d'erreur de bit soit inférieur à une valeur prédéterminée.

8. Dispositif de sélection de mode de communication, comprenant :
un module d'obtention de paramètre d'état, conçu pour obtenir un paramètre d'état actuel d'un terminal ; et
un module de sélection de mode de communication, conçu pour, à partir d'un premier mode correspondant à une technique de diversité spatiale et d'un second mode correspondant à une technique de multiplexage spatial, commuter vers le second mode en guise de mode de communication entre le terminal et une station de base correspondante quand le paramètre d'état satisfait à une condition prédéterminée, la condition prédéterminée consistant au moins à ce que le nombre d'antennes actuellement utilisées par le terminal soit supérieur à 1, de sorte que le passage dans le second mode soit rejeté si le nombre d'antennes est égal à 1.

9. Dispositif selon la revendication 8, dans lequel le module d'obtention de paramètre d'état comprend :
une unité de réception, conçue pour recevoir un message contenant le nombre d'antennes actuellement utilisées, envoyé par le terminal ; et
une unité d'analyse, conçue pour acquérir, en analysant le message, le nombre d'antennes actuellement utilisées par le terminal.

10. Dispositif selon la revendication 8 ou 9, le dispositif étant applicable à une station de base ou à un terminal de communication mobile.
